Europäisches Patentamt

European Patent Office

Office européen des brevets

(19)

(11) Veröffentlichungsnummer: **0 325 099**
**B1**

(12) **EUROPÄISCHE PATENTSCHRIFT**

(45) Veröffentlichungstag der Patentschrift:
05.12.90

(51) Int. Cl.⁵: **F16K 11/04**

(21) Anmeldenummer: **88890324.2**

(22) Anmeldetag: **16.12.88**

(54) Umschaltvorrichtung für sanitäre Armaturen.

(30) Priorität: **17.12.87 AT 3342/87**

(43) Veröffentlichungstag der Anmeldung:
**26.07.89 Patentblatt 89/30**

(45) Bekanntmachung des Hinweises auf die Patenterteilung:
**05.12.90 Patentblatt 90/49**

(84) Benannte Vertragsstaaten:
**DE ES FR GB GR IT**

(56) Entgegenhaltungen:
**DE-A- 2 651 559**
**DE-B- 1 428 407**
**DE-B- 2 103 975**
**DE-B- 2 256 659**
**DE-U- 7 810 761**
**FR-A- 2 253 177**

(73) Patentinhaber: **IDEAL-STANDARD GMBH, Euskirchener Strasse 80, D-5300 Bonn 1(DE)**

(72) Erfinder: **Steffens, Rudolf, Hauptstrasse nr. 54, D-5569 Mückeln(DE)**
Erfinder: **Meyer, Harald, D-5560 Wittlich(DE)**

(74) Vertreter: **Puchberger, Georg, Dipl.-Ing., Patentanwälte Dipl.-Ing. Georg Puchberger Dipl.-Ing. Rolf Puchberger Dipl.-Ing. Peter Puchberger Singerstrasse 13 Postfach 55, A-1010 Wien(AT)**

# Beschreibung

Die Erfindung betrifft eine Umschaltvorrichtung für sanitäre Armaturen mit mehreren Wasserentnahmestellen ohne Auslaufwiderstand, wobei eine Kammer vorgesehen ist, in die die Wasserzufuhr und wahlweise absperrbar die Leitungen zu den Wasserentnahmestellen münden, und wobei das Absperrelement für die Leitungen zu den Wasserentnahmestellen in der Kammer beweglich ist (z.B. DE-B 2 103 975).

Die üblichen Wannenfüll- und Brausebatterien sind mit Neoperldüsen ausgerüstet. Diese drosseln den Wasserdurchfluß so stark, daß ein Rückstau entsteht und dieser bewirkt eine leichte Bedienung der Umschaltung. Die Durchflußmenge beträgt hiebei ca. 35 l/min bei einem Wasserdruck von 5 bar.

Aufgabe der Erfindung ist es, eine Umschaltvorrichtung für Wasserentnahmestellen ohne Auslaufwiderstand und einer Durchflußleistung von ca. 100 bis 120 l/min bei 5 bar zu schaffen, wobei trotzdem eine angenehm zu bedienende Umschaltung gewährleistet ist.

Erfindungsgemäß wird jetzt vorgeschlagen, daß das Absperrelement eine Stauscheibe und eine mit einem Ventilkegel versehene Hülse besitzt, wobei die Stauscheibe auf der das Absperrelement betätigenden Spindel fest aufgesetzt ist und die Hülse beweglich zwischen der Stauscheibe und einem Anschlag auf der Spindel gehalten ist und wobei sich die Stauscheibe, bei einer Umschaltung, bis in die Nähe des Eingangsbereichs einer Leitung zu einer Wasserentnahmestelle bewegt und daß am Eingangsbereich jeder Leitung zu einer Wasserentnahmestelle ein dem Ventilkegel angepaßter Ventilsitz vorgesehen ist.

Mit Hilfe der Erfindung wird der Druckschlag beim Betätigen der Umschaltung in widerstandslosen Ausläufen vermieden. Es wird der Umschaltdruck bei hohen Drücken gemindert und das Umschalten kann ohne Kraftaufwand erfolgen.

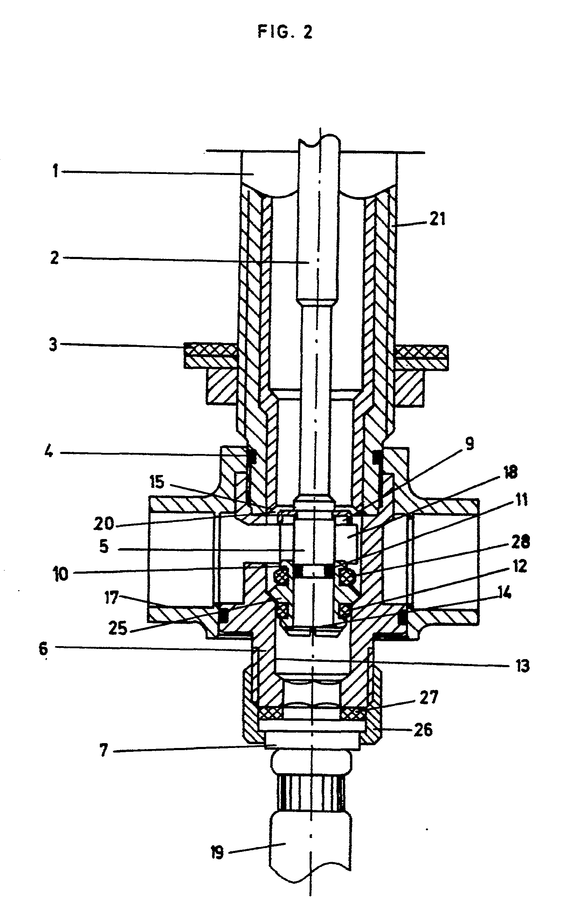

Die Erfindung wird nun anhand der Zeichnungen näher beschrieben. Fig.1 zeigt die Stellung des Absperrelementes bei der Füllung einer Badewanne. Fig.2 zeigt die Umschalt- und Drosselstellung und Fig.3 zeigt die Stellung, wenn die Armatur auf die Dusche oder Brause umgeschaltet ist.

Die Armatur besteht so wie üblich aus einem Auslaufrohr 1, das an seinem unteren Bereich ein Gewinde 21 trägt und über eine Flächendichtung 3 und eine Befestigungseinrichtung an einem Waschtisch (nicht dargestellt) einer Abdeckung oder dgl. befestigt ist. Zulaufleitungen 16, 17 für die Zuführung von kaltem und warmem Wasser sind mit einem Anschlußstück 6 verbunden, in dem sich eine Kammer 18 befindet, in die das Auslaufrohr 1 mündet und an die andererseits auch eine Leitung 19 zu einer weiteren Wasserentnahmestelle angeschlossen ist. In der Zeichnung ist ein Druckschlauch 19 dargestellt, z.B. ein Schlauch, der von Metall umgeben ist und an seinem Ende eine Brause (nicht dargestellt) trägt. Selbstverständlich kann auch eine andere Wasserentnahmestelle an dieser Stelle angeschlossen sein. Der Anschluß des Druckschlauches 19 erfolgt über einen Verbinder 7 unter Zwischenlage einer Dichtung 27 mit Hilfe einer Mutter 26. Für die Zulaufleitungen 16 und 17 sind Dichtungen 4 vorgesehen.

Durch das Auslaufrohr 1 erstreckt sich eine Spindel 2, die ein Absperrelement 5 trägt. Dieses Absperrelement besitzt eine Stauscheibe 9, die mit der Spindel 2 fest verbunden ist und eine Hülse 10, die auf der Spindel 2 verschiebbar ist. An ihrer Außenseite ist die Hülse 10 mit dem Ventilkegel 25 versehen, der als Rippe mit zwei gegeneinander geneigten Flächen ausgebildet ist. Die Hülse trägt weiters einen O-Ring 12, der an der Innenwandung eines Dichtzylinders 13 anliegt. Eine Dichtung 11 ist zwischen der Innenwandung der Hülse 10 und der Spindel 2 vorgesehen. Am Ende ist die Spindel schließlich noch mit einem Anschlag 14 versehen.

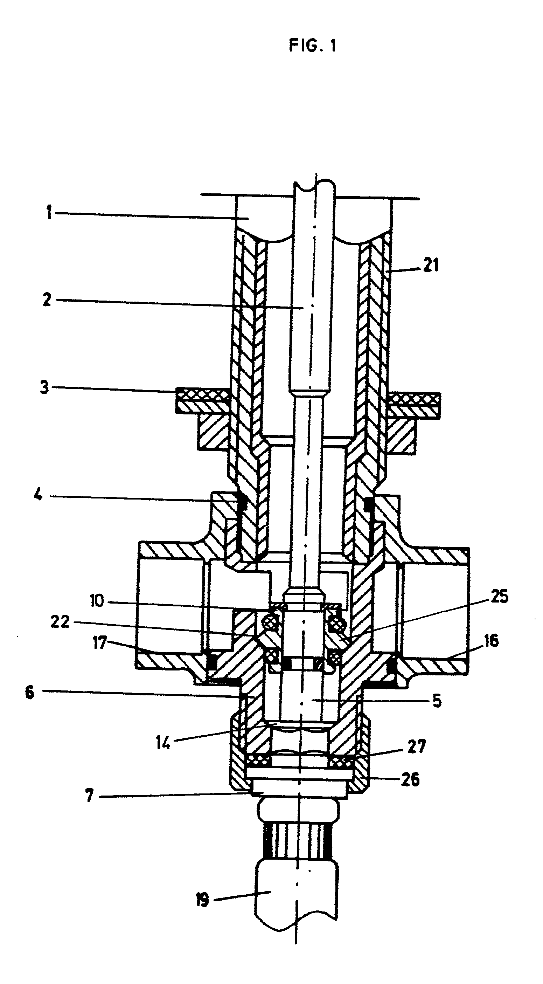

In Fig.1 befindet sich das Absperrelement 5 in einer Stellung, bei der das über die Zulaufleitungen 16 und/oder 17 einströmende Wasser über den Innenraum des Auslaufrohres 1 abgeleitet wird, d.h. also, das Wasser kann z.B. zum Füllen einer Wanne verwendet werden. In dieser Stellung liegt der Ventilkegel 25 mit seiner unteren Fläche auf dem Ventilsitz 22 des Anschlußstückes 6 auf und der Anschlag 14 ist von der Hülse 10 getrennt worden und befindet sich in seiner tiefsten Stellung, was bedeutet, daß auch die Stauscheibe 9 sich in ihrer untersten Lage befindet.

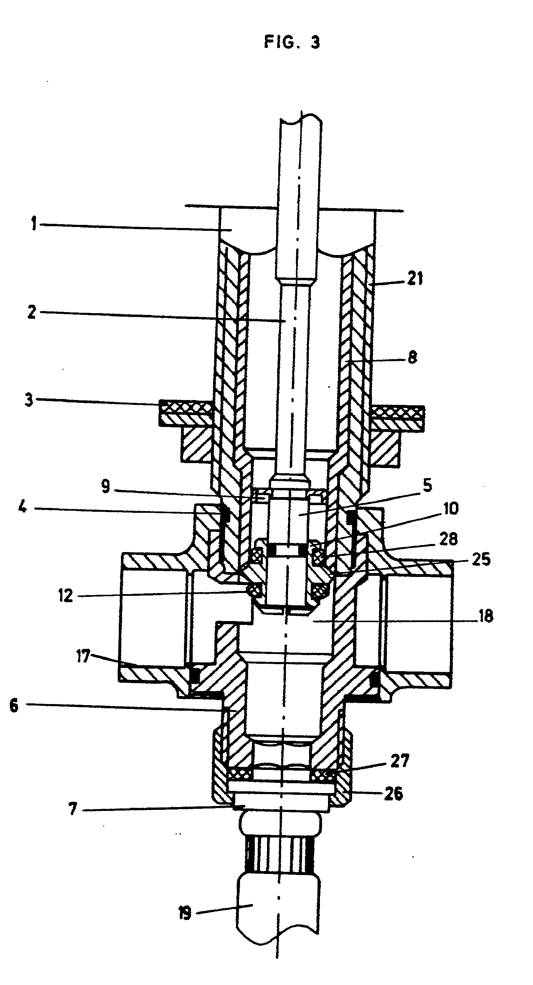

Betätigt man die Umschaltung, so muß die Spindel 2 nach oben bewegt werden, und zwar so lange bis der Anschlag 14 in Kontakt mit der Hülse 10 tritt. Dabei bewegt sich die Stauscheibe 9 bis in die Nähe des Ventilsitzes 15 am Auslaufrohr 1, wobei zwischen diesem Ventilsitz 15 und der Stauscheibe 9 ein Ringspalt 20 verbleibt. Durch die Reibung des O-Ringes 12 an der Wandung des Dichtzylinders 13 verbleibt der Ventilkegel 25 auf dem Ventilsitz 22. Voraussetzung dafür ist auch, daß die Druckfläche der Stauscheibe 9 etwas kleiner ist als die des Ventilkegels 25. In dieser Stellung wird der Wasserdurchfluß auf ca. 30 l (je nach Druck) begrenzt. Hierauf läßt sich dann die Umschaltung ohne großen Kraftaufwand und ohne Druckschlag zuendebetätigen, so daß dann die Stellung gemäß Fig.3 erreicht wird, bei der der Ventilkegel 25 jetzt an dem oberen Ventilsitz 15 anliegt und die Stauscheibe 9 in den Innenraum des Auslaufrohres 1 eingetreten ist. Eine Abdichtung des Ringkanales 20 erfolgt hier durch die Dichtung 28, die jedoch auch weggelassen werden kann. Das Wasser kann nunmehr über das Anschlußstück 6 und die Kammer 18 ungehindert in den Druckschlauch 19 eintreten.

Soll von der Wannenfüllstellung auf die Brausestellung umgeschaltet werden, so ist eine Drosselung durch die nachgeschaltete Handbrause, maximale Durchflußmenge 20 l/min, nicht notwendig. Es ist selbstverständlich auch möglich, andere Wasserentnahmestellen an die Umschaltvorrichtung anzuschließen, z.B. Waschtisch, Munddusche, Bidet, Unterdusche usw. Das dargelegte Prinzip kann auch als Automatikumschaltung angewendet werden und es ist möglich, die gesamte Umschaltvorrichtung gemeinsam auszutauschen. Zu diesem Zweck befindet sich im Auslaufrohr 1 eine Umschaltwechselhülse 8, die mit dem Absperrelement 5 nach oben entfernt werden kann und durch eine andere Vorrichtung ersetzt werden kann. Die Umschaltung selbst kann wie bisher in einem Zug durchgeführt werden, allerdings sollte ein zu schnelles Ziehen vermieden werden. Man hat so die Möglichkeit, den Druckschlag zu unterbinden, wobei nur die oberen Druckbereiche berücksichtigt werden müssen.

### Patentansprüche

1. Umschaltvorrichtung für sanitäre Armaturen mit mehreren Wasserentnahmestellen ohne Auslaufwiderstand, wobei eine Kammer (18) vorgesehen ist, in die die Wasserzufuhr und wahlweise absperrbar die Leitungen (1, 19) zu den Wasserentnahmestellen münden, und wobei das Absperrelement (5) für die Leitungen (1, 19) zu den Wasserentnahmestellen in der Kammer (18) beweglich ist, dadurch gekennzeichnet, daß das Absperrelement (5) eine Stauscheibe (9) und eine mit einem Ventilkegel (25) versehenen Hülse (10) besitzt, wobei die Stauscheibe (9) auf der das Absperrelement (5) betätigenden Spindel (2) fest aufgesetzt ist und die Hülse (10) beweglich zwischen der Stauscheibe (9) und einem Anschlag (14) auf der Spindel (2) gehalten ist und wobei sich die Stauscheibe (9), bei einer Umschaltung, bis in die Nähe des Eingangsbereichs einer Leitung (1) zu einer Wasserentnahmestelle bewegt, und daß am Eingangsbereich jeder Leitung (1, 19) zu einer Wasserentnahmestelle ein dem Ventilkegel (25) angepaßter Ventilsitz (22, 15) vorgesehen ist.

2. Umschaltvorrichtung nach Anspruch 1, dadurch gekennzeichnet, daß der Ventilkegel (25) Teil einer Hülse (10) ist und als zwei gegeneinander geneigte Flächen aufweisende Rippe ausgebildet ist, wobei die Hülse (10) an ihrer Außenfläche eine Ringdichtung (12) trägt und die Spindel (2) ebenfalls im Bereich der Hülse (10) eine Dichtung (11) aufweist.

3. Umschaltvorrichtung nach Anspruch 1 oder 2, dadurch gekennzeichnet, daß die Fläche der Stauscheibe (9) kleiner ist als die Fläche der Rippe (25) an der Hülse (10).

4. Umschaltvorrichtung nach Anspruch 3, dadurch gekennzeichnet, daß der Durchmesser des Eintrittsbereiches der Leitung zu der einen Wasserentnahmestelle größer ist als der Durchmesser der Stauscheibe (9).

5. Umschaltvorrichtung nach einem der vorhergehenden Ansprüche, dadurch gekennzeichnet, daß der Abstand der Stauscheibe (9) vom Ende der Spindel (2) etwas geringer ist als der Abstand der Ventilsitze (22, 15) an den Eintrittsbereichen der Leitungen (1, 19) zu den Wasserentnahmestellen, so daß bei einer Sperrung der einen Leitung vor Abheben der Rippe an der Stauscheibe (9) ein Ringkanal (20) entsteht.

### Revendications

1. Inverseur pour robinetteries sanitaires, comportant plusieurs départs de prélèvement d'eau sans résistance d'écoulement, dans lequel est prévue une chambre (18) où débouchent l'arrivée d'eau et les conduites (1, 19) obturables de manière sélective qui aboutissent aux départs de prélèvement d'eau, l'organe d'obturation (5) associé aux conduits (1, 19) qui aboutissent aux départs de prélèvement d'eau étant mobile dans la chambre (18), caractérisé en ce que l'organe d'obturation (5) comporte un disque de retenue (9) et une douille (10) pourvue d'un portage conique d'obturation 25, le disque de retenue (9) étant monté sur la tige d'actionnement (2) de l'organe d'obturation (5), la douille (10) étant tenue de manière mobile sur la tige (2) entre le disque de retenue (9) et une butée (14), et le disque de retenue se déplaçant en cas de manoeuvre d'inversion jusqu'à l'endroit de la zone d'entrés d'un conduit desservant un départ de prélèvement d'eau, et en ce qu'un siège d'obturation (22, 15) adapté à recevoir le portage conique d'obturation (25) est prévu à l'endroit de l'entrée de chaque conduit (1, 19) desservant un départ de prélèvement d'eau.

2. Inverseur selon la revendication 1, caractérisé en ce que le portage conique d'obturation (25) fait partie d'une douille (10) et est constitué par une saillie annulaire présentant deux faces inclinées opposées, la douille (10) portant sur sa face extérieure une bague d'étanchéité (12) et la tige de manoeuvre (2) portant également un joint (11) à l'endroit de la douille (10).

3. Inverseur selon l'une des revendications 1 ou 2, caractérisé en ce que la surface du disque de retenue (9) est inférieure à la surface de la saillie annulaire (25) en appui sur la douille (10).

4. Inverseur selon la revendication 3, caractérisé en ce que le diamètre de l'entrée du conduit desservant l'un des départs de prélèvement d'eau est supérieur au diamètre du disque de retenue (9).

5. Inverseur conforme à l'une des revendications 1 à 4, caractérisé en ce que la distance entre le disque de retenue (9) et l'extrémité de la tige d'actionnement (2) est un peu plus faible que la distance entre les sièges d'obturation (22, 15) et les entrées des conduits (1, 19) qui desservent les départs de prélèvement d'eau, si bien qu'un canal annulaire (20) se forme à l'endroit du disque de retenue (9) avant le soulèvement de la saillie annulaire, au moment d'une manoeuvre d'obturation de l'un des conduits.

### Claims

1. Change-over arrangement for sanitary fittings having several water withdrawal points without outflow resistance, with a chamber (18) being provided, into which issue the water feed and, such that they are capable of being shut off selectively, the conduits (1, 19) to the water withdrawal points, and the shut-off element (5) for the conduits (1, 19) to the water withdrawal points being moveable in the chamber (18), characterised in that the shut-off element (5) has a retaining disc (9) and a sleeve (10) provided with a valve cone (25), the retaining disc (9) being fixedly placed on the spindle (2) which actuates the shut-off element (5) and the sleeve (10) being held on the spindle (2) so as to be moveable between the retaining disc (9) and a stop (14), and the retaining disc (9) being moved, in the event of a change-over, up to the level of the inlet area of a conduit (1) to a water withdrawal point, and in that a valve seat (22, 15) adapted to the valve cone (25) is provided at the inlet area of each conduit (1, 19) to a water withdrawal point.

2. Change-over arrangement according to claim 1, characterised in that the valve cone (25) is part of a sleeve (10) and is formed as a rib which has two surfaces inclined in relation to each other, the sleeve (10) bearing on its outer surface a ring seal (12) and the spindle (2) likewise having a seal (11) in the area of the sleeve (10).

3. Change-over arrangement according to claim 1 or 2, characterised in that the area of the retaining disc (9) is smaller than the area of the rib (25) on the sleeve (10).

4. Change-over arrangement according to claim 3, characterised in that the diameter of the inlet area of the conduit to the one water withdrawal point is greater than the diameter of the retaining disc (9).

5. Change-over arrangement according to one of the preceding claims, characterised in that the spacing of the retaining disc (9) from the end of the spindle (2) is somewhat smaller than the spacing of the valve seats (22, 15) at the inlet areas of the conduits (1, 19) to the water withdrawal points so that an annular channel (20) develops at the retaining disc (9) when the one conduit is blocked before the rib is lifted.

FIG. 1

FIG. 2

FIG. 3